# FASCICULE DE BREVET EUROPEEN

(11) **EP 0 497 635 B1**
(45) Date de publication et mention de la délivrance du brevet: **27.12.1995**
(21) Numéro de dépôt: 92400028.4
(22) Date de dépôt: 07.01.1992
(51) Int. Cl.: G05B 19/4061, G05B 19/42, B25J 9/18

(54) **Procédé de pilotage d'un bras de robot en définissant des trajets de substitution**
Verfahren zur Führung eines Roboterarmes durch definieren von Ersatzstrecken
Method of piloting a robot arm by defining substitute paths

(30) Priorité: 09.01.1991 FR 9100193
(43) Date de publication de la demande: 05.08.1992
(73) Titulaire: COMMISSARIAT A L'ENERGIE ATOMIQUE, 75015 Paris (FR)
(72) Inventeur: Detriche, Jean-Marie, F-78590 Noisy le Roi (FR)
(74) Mandataire: Ilgart, Jean-Christophe

(56) Documents cités:
- EP-A- 0 108 549
- GB-A- 2 229 296
- US-A- 4 967 126

## Description

L'invention se rapporte à un procédé de pilotage d'un bras de robot en définissant des trajets de substitution.

Plusieurs moyens existent pour commander les déplacements d'un bras de robot composé de tronçons reliés par des articulations vers un but à atteindre. Les ordres de déplacement peuvent être donnés à la voix, en pressant un bouton ou en basculant un levier. Selon une autre classification, le déplacement commandé peut être incrémental, c'est-à-dire qu'un ordre commande un déplacement élémentaire invariable et déterminé et qu'il faut le répéter autant de fois que nécessaire pour atteindre le but, ou bien être proportionnel à un temps, c'est-à-dire que son amplitude dépend du temps pendant lequel l'organe de commande est commuté à un état déterminé. Enfin, une autre solution applicable, si on utilise un levier, consiste à rendre le déplacement proportionnel au déplacement du levier. Le déplacement est alors commandé en position ou en vitesse, c'est-à-dire que le bras prend une position ou une vitesse qui dépend du déplacement du levier.

On peut encore envisager, suivant une conception tout à fait différente, de définir le but à atteindre non par un déplacement à partir d'une position initiale mais par un point de destination défini en introduisant ses coordonnées dans un repère fixe par un clavier à l'aide d'un langage de programmation ou après avoir mémorisé la position atteinte par le robot au cours d'un apprentissage préliminaire.

Dans tous les cas, la trajectoire est définie par des coordonnées cartésiennes que le système de pilotage du robot doit convertir en informations de rotations des articulations qui relient les différents tronçons du bras ou, plus généralement, de mouvements de ces articulations : on considère ici comme des articulations tous les genres de mécanismes qui peuvent unir des tronçons de bras de robot, en particulier les coulisses, en plus des pivots ou des charnières qui autorisent des rotations. Ce calcul échappe à la commande directe effectuée par l'opérateur. Comme en pratique les articulations ne peuvent être mises que dans des états appartenant à des plages de fonctionnement limitées par des états de butée, il arrive fréquemment que le trajet direct, entre la position de départ du robot et celle qui correspond au but à atteindre, ne puisse être effectivement parcouru car certaines articulations entrent en butée. Dans les systèmes connus jusqu'à ce jour, il n'existe aucun moyen d'obvier à cette difficulté et le bras est arrêté : l'opérateur est contraint de définir lui-même un trajet de substitution permettant de débloquer le bras en s'éloignant des états de butée, ce qui est fastidieux et pas forcément facile quand les bras sont complexes. Le brevet britannique 2 229 296 décrit cependant, pour un robot à apprentissage, un procédé où les parties de la trajectoire apprise où des articulations sont en butée ne sont pas mémorisées, de sorte que la trajectoire parcourue à la restitution ne comporte pas ces parties. Il n'y a pas dans ce procédé, contrairement à l'invention, de trajet de substitution créé automatiquement pendant que la trajectoire est parcourue.

On a cherché en mettant en oeuvre l'invention à épargner ces soucis à l'utilisateur : des trajets de substitution ou trajets dégrades, que le bras de robot suit dès qu'une entrée en butée d'une des articulations l'empêche de suivre le trajet direct, sont automatiquement créés.

Le brevet US-A-4 967 126 décrit un bras de robot coudé et muni d'un degré de liberté de redondance, qui permet, pour une position déterminée de l'extrémité du bras (le poignet), de mettre le coude à un point quelconque d'un cercle afin d'éviter des obstacles.

Le brevet EP-A-0 108 549 décrit un bras de robot dont les articulations subissent des rotations programmées à l'avance quand des obstacles latéraux sont rencontrés, ce qui peut cependant produire des déplacements de grande ampleur sur l'extrémité du bras, qui sont dangereux ou incommodes dans des environnements encombrés.

Selon l'invention, le trajet de substitution est défini en calculant des points intermédiaires théoriques entre des positions atteintes par le bras et le but à atteindre, puis les états intermédiaires théoriques des articulations aux points intermédiaires théoriques, après quoi les articulations sont amenées à un état de butée pour les articulations dont l'état intermédiaire théorique est inaccessible et à l'état intermédiaire théorique pour les autres articulations, faisant ainsi atteindre un point intermédiaire réel par le bras. Ce processus est répété jusqu'à ce que le but soit atteint.

Le procédé peut être raffiné si on introduit un critère selon lequel le trajet de substitution est interrompu lorsque certaines articulations entrent isolément ou simultanément en butée. Il s'agit en fait d'un critère de sécurité par lequel on empêche des mouvements trop éloignés du mouvement souhaité dans des conditions où ils ne seraient ni prévus ni contrôlés.

Un bras de robot sur lequel l'invention a été implantée comporte trois tronçons articulés en rotation dans un plan horizontal et mobiles conjointement en translation verticale, un quatrième tronçon articulé en rotation dans un plan vertical à un des trois tronçons précédents et un organe articulé au quatrième tronçon en rotation selon un mouvement de pivotement.

On va maintenant décrire l'invention à l'aide des figures suivantes annexées à titre illustratif et non limitatif :
· la figure 1 est une vue du bras de robot qui vient d'être décrit succinctement ;
· la figure 2 représente une articulation entre deux tronçons de bras de robot ;
· la figure 3 illustre un trajet direct et un trajet de substitution ; et
· la figure 4 est un organigramme de définition du procédé selon l'invention.

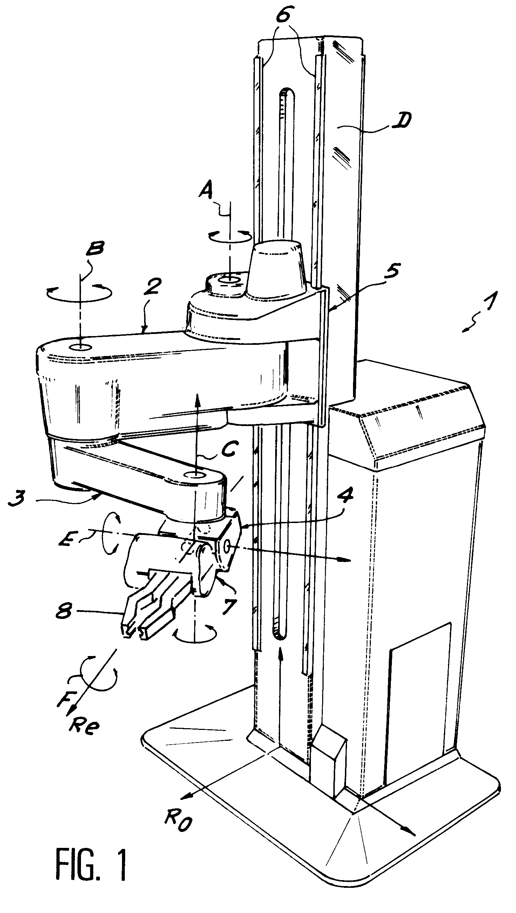

Le bras de robot de la figure 1 comprend un bâti 1 fixe et trois tronçons 2, 3 et 4 reliés en chaîne. Un premier tronçon 2 tourne dans un plan horizontal, articulé à une extrémité à un curseur 5 selon une première articulation A d'axe vertical. Le tronçon 3 est relié au tronçon 2 à l'autre extrémité de celui-ci par une deuxième articulation B d'axe vertical ; le troisième tronçon 3 est de même articulé à l'autre extrémité du deuxième tronçon 2 par une troisième articulation C, également d'axe vertical. Le curseur 5 est mobile sur des rails verticaux 6 appartenant au bâti 1 suivant un degré de liberté de translation verticale qu'on appellera une quatrième articulation D par commodité.

Le troisième tronçon 4 porte un poignet 7 qui lui est articulé selon une cinquième articulation E d'axe horizontal. Enfin, une pince 8 apte à saisir des objets est placée sur le poignet 7 et peut pivoter autour d'une sixième articulation F d'axe perpendiculaire à la précédente E. Rₒ et Rₑ symbolisent des repères cartésiens liés respectivement à un point fixe à la base du bâti 1 et à l'extrémité du bras, par exemple au poignet 7. Ces repères servent à définir les déplacements du bras du robot. Les déplacements de translation du poignet 7 peuvent en particulier être commandés par des indications de translation ou de position du point de destination exprimées par des coordonnées cartésiennes dans le repère Rₒ.

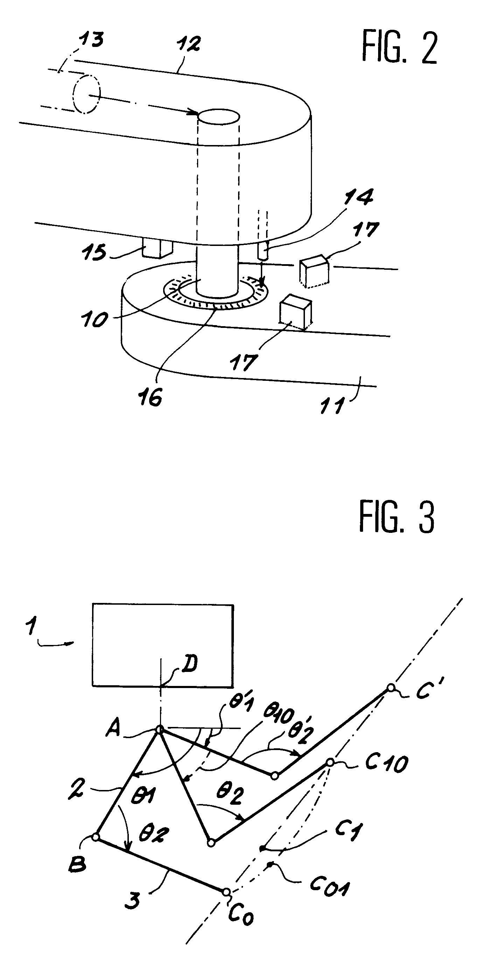

La constitution de chaque articulation rotative est schématisée à la figure 2. Il y a tout d'abord un axe 10 d'articulation qui relie entre eux deux tronçons, ici désignés par 11 et 12. L'axe 10 est rigidement relié à un des tronçons 11, et l'autre tronçon 12 porte un moteur 13 qui le fait tourner autour de l'axe 10 ainsi qu'un compteur 14 et une butée 15. Le compteur 14 lit des graduations 16 disposées en cercle autour de l'axe 10, sur une surface plane du tronçon 11, et la butée 15 peut toucher les contacts de deux interrupteurs 17 également situés sur le tronçon 11. Les interrupteurs 17 définissent avec la butée 15 des états de mise en butée qui limitent une courbe de fonctionnement d'états admissibles de l'articulation. Chacun de ces états peut être repéré à l'aide du codeur constitué par le compteur 14 et les graduations 16. L'invention peut bien entendu être utilisée avec d'autres codeurs et d'autres genres de butées qui sont des équivalents usuels dans cette technique. Le moteur 13 et le compteur 14 sont reliés, ainsi que les interrupteurs 17, à un système de pilotage du robot qui n'est pas représenté.

On peut également préférer employer des butées immatérielles, définies par le logiciel de commande du robot, placées avant les butées matérielles telles que décrites.

Les articulations à mouvement de translation peuvent être construites avec les mêmes moyens adaptés de manière évidente.

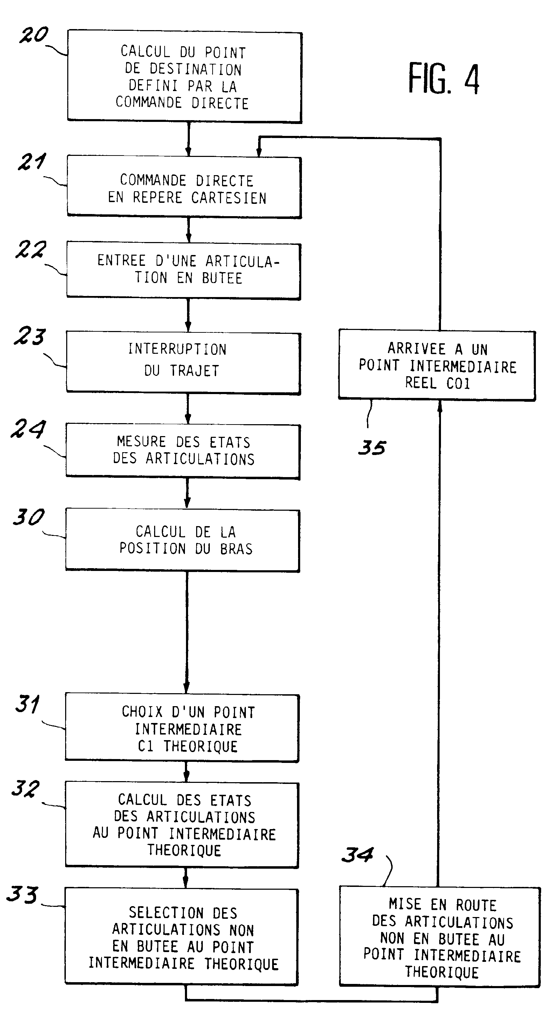

Des trajets de substitution sont obligatoires dans certaines situations à cause de la présence des butées. Considérons la configuration de la figure 3 où on s'intéresse à un déplacement des tronçons 2 et 3 définissant un trajet de la troisième articulation C. On impose au bras de se mouvoir pour que la troisième articulation C atteigne un point de destination C′ à partir d'un état Cₒ où le premier tronçon 2 fait un angle ϑ1 avec le bâti 1 et un angle ϑ2 avec le deuxième tronçon 3. Le trajet vers le point C′ serait normalement direct, c'est-à-dire en ligne droite, pour optimiser les mouvements du bras. Cela impliquerait de réduire l'angle ϑ2, mais la figure 3 représente justement le bras à un état où la deuxième articulation B est en butée car l'angle ϑ2 ne peut pas diminuer au-dessous de l'angle droit. Sa réduction est donc impossible et il faut définir un trajet de substitution dont la figure 4 indique un procédé d'obtention.

Une façon de créer des trajets de substitution est résumée par l'organigramme de la figure 4.

Quand la commande directe du bras est possible, des instructions sont données pour déplacer l'extrémité du bras suivant les directions principales d'un repère cartésien tel Rₒ ou Rₑ en pratique, c'est-à-dire vers l'avant, vers l'arrière, vers les côtés ou en direction verticale tout en la faisant tourner jusqu'à la position angulaire souhaitée. Les instructions de commande directe permettant de déduire un point de destination C′, soit directement soit par l'intermédiaire d'un déplacement (étape 20), sont converties automatiquement par transformations de coordonnées en mouvements de commande (étape 21) des articulations jusqu'à ce que l'une d'entre elles entre éventuellement en butée (étape 22). Le trajet est alors interrompu et les états des articulations du bras à ce moment sont mesurés (étapes 23 et 24) ou évalués par des calculs. Le point de destination C′ peut être soit le point de destination défini par la commande du bras, soit un point intermédiaire entre ce point de destination et le point de départ. Des points intermédiaires sont en effet automatiquement calculés dans la plupart des systèmes de pilotage des bras de robot pour s'assurer que la trajectoire est suivie avec une précision suffisante : le système de pilotage vérifie que les articulations atteignent bien ensemble les valeurs des coordonnées d'articulation calculées pour ces points intermédiaires. Des corrections pour rectifier la trajectoire sont effectuées si des déviations apparaissent. Le choix des points intermédiaires et leur nombre résulte de critères particuliers à chaque système de pilotage, dont le plus simple consiste à placer les points à des intervalles réguliers et fixes.

Quand les états des articulations sont évalués, un calcul de la position du bras en coordonnées cartésiennes de la troisième articulation C est effectué à l'étape 30. Le trajet de substitution est défini par un processus itératif et consiste à rapprocher peu à peu la troisième articulation C du point de destination C′. Pour cela (figure 3), on définit sur le segment CₒC′ un point intermédiaire C1 à une distance déterminée de la position actuelle Cₒ de la troisième articulation C (étape 31). Les états ϑ11 et ϑ21 des articulations A et B à ce point intermédiaire C1 sont alors calculés à l'étape 32. Il s'agit en fait des états théoriques que les articulations devraient prendre pour parvenir effectivement à ce point. Certains de ces états peuvent être au-delà des états de butée, ce qui impose d'effectuer une sélection (étape 33) des articulations (ici A, car ϑ11 n'est pas un état de butée) qui ne seraient pas en butée au point intermédiaire C1. Ces articulations sont alors mises en marche (étape 34) pour parvenir aux états calculés à l'étape 32 ; les articulations qui entreraient en butée (ici B, car ϑ2 ne peut diminuer et ϑ21 lui est inférieur) ne sont pas bougées. Cette façon de procéder fait parvenir en fait le bras (étape 35) à un point C01 situé sur un trajet de substitution découlant des états d'articulation effectivement atteints ϑ11 et ϑ2 et distinct du point C1 calculé précédemment.

Les coordonnées cartésiennes de ce point intermédiaire réel C01 sont alors calculées, et on revient alors à l'étape 21 pour recommencer le processus et se rapprocher par étapes successives du point de destination C′ jusqu'à l'atteindre effectivement en choisissant un nouveau point intermédiaire théorique sur le segment joignant les points C01 et C′. Les articulations qui sont susceptibles d'entrer en butée en parcourant le trajet de substitution peuvent varier au cours de ce trajet sans que l'opérateur en soit informé ni doive prendre des mesures particulières. On a représenté sur la figure 3 le point C10 auquel la deuxième articulation B cesse d'être en butée et où l'angle qu'elle fait commence à croître de la valeur ϑ2 jusqu'à la valeur finale ϑ′2. Ce mode de réalisation, qui impose des calculs supplémentaires et notamment des conversions plus nombreuses entre les coordonnées cartésiennes et les coordonnées d'articulation, permet cependant une convergence très rapide en général et peut donc être considéré favorablement si des utilisations du bras de robot dans des environnements encombrés sont concevables.

Le procédé peut être perfectionne si un critère supplémentaire est introduit pour rendre tout trajet de substitution impossible dans le cas où un trop grand nombre d'articulations, ou certaines articulations ayant un effet crucial sur le travail du robot, entreraient en butée. Dans le cas du robot de la figure 1, on a ainsi prévu que tout mouvement serait interrompu si quatre des articulations entraient ensemble en butée ou si les cinquième et sixième articulations E et F entraient ensemble en butée. Ce dernier critère est justifie dans le cas d'un robot termine par une pince 8 de préhension d'objets usuels, tels que des verres remplis de liquide, qui ne doivent pas être inclinés excessivement. D'autres critères peuvent évidemment être définis pour d'autres bras de robots ou des applications différentes.

## Revendications

1. Procédé de pilotage d'un bras de robot composé de tronçons (2, 3, 4, 5, 7, 8) reliés par des articulations (A à F), dans lequel un but à atteindre par un trajet direct est défini par des instructions de commande converties en déplacements des tronçons, caractérisé en ce que les articulations présentent des états de butée selon divers états d'articulations, qu'un trajet de substitution est déterminé et suivi automatiquement à la place du trajet direct lorsque des articulations entrent en butée en suivant le trajet direct, le trajet de substitution étant défini en calculant des points intermédiaires théoriques (C1) entre des positions atteintes par le bras (C, CO1) et le but à atteindre, puis les états intermédiaires théoriques (ϑ11, ϑ21) des articulations aux points intermédiaires théoriques, et en ce que les articulations sont amenées, successivement pour chaque point intermédiaire théorique, à un état de butée (ϑ2) pour les articulations dont l'état intermédiaire théorique est inaccessible et à l'état intermédiaire théorique (ϑ11) pour les autres articulations, de manière à faire parvenir le bras à un point intermédiaire réel.

2. Procédé de pilotage d'un bras de robot suivant la revendication 1, caractérisé en ce que le trajet de substitution est interrompu lorsque certaines articulations entrent isolément en butée.

3. Procédé de pilotage d'un bras de robot suivant la revendication 2, caractérisé en ce que le trajet de substitution est interrompu lorsque certaines articulations entrent ensemble en butée.

4. Procédé de pilotage d'un bras de robot suivant l'une quelconque des revendications 1 à 3, caractérisé en ce que le bras comporte trois tronçons (2, 3, 4) articulés en rotation dans un plan horizontal et mobiles conjointement en translation verticale, un quatrième tronçon (7) articulé en rotation dans un plan vertical à un des trois tronçons précédents et un organe (8) articulé au quatrième tronçon en rotation selon un mouvement de pivotement.

## Patentansprüche

1. Verfahren zur Führung eines aus Teilstücken (2, 3, 4, 5, 7, 8) zusammengesetzen Roboterarms, verbunden durch Gelenke (A bis F), bei dem ein durch eine direkte Bahn zu erreichendes Ziel definiert wird durch in Bewegungen der Teilstücke umgewandelte Steuerbefehle,
**dadurch gekennzeichnet,**
daß die Gelenke diversen Gelenklagen entsprechende Anschlag- bzw. Stopplagen aufweisen, daß automatisch eine Ersatzbahn festgelegt und anstatt der direkten Bahn verfolgt wird, wenn Gelenke beim Verfolgen der direkten Bahn zum Anschlag kommen, wobei diese Ersatzbahn definiert wird durch Berechnen der theoretischen Zwischenpunkte (C1) zwischen den durch den Arm (C, C01) erreichten Positionen und dem zu erreichenden Ziel, sodann der theoretischen Zwischenlagen (Θ11, Θ21) der Gelenke an den theoretischen Zwischenpunkten, und dadurch, daß die Gelenke nacheinander für jeden theoretischen Zwischenpunkt in eine Anschlag- bzw. Stopplage (Θ2) gebracht werden für die Gelenke, deren theoretische Zwischenlage unerreichbar ist, und in die theoretische Zwischenlage (Θ11) für die anderen Gelenke, um den Arm einen realen Zwischenpunkt erreichen zu lassen.

2. Verfahren zur Führung eines Roboterarms nach Anspruch 1, dadurch gekennzeichnet, daß die Ersatzbahn unterbrochen wird, wenn bestimmte Gelenke einzeln zum Anschlag kommen.

3. Verfahren zur Führung eines Roboterarms nach Anspruch 2, dadurch gekennzeichnet, daß die Ersatzbahn unterbrochen wird, wenn bestimmte Gelenke zusammen zum Anschlag kommen.

4. Verfahren zur Führung eines Roboterarms nach einem der Ansprüche 1 bis 3, dadurch gekennzeichnet, daß der Arm drei Teilstücke (2, 3, 4) umfaßt, in einer horizontalen Ebene drehbar angelenkt und gemeinsam vertikal verschiebbar, ein viertes Teilstück (7), in einer vertikalen Ebene drehbar an eines der drei vorhergehenden Teilstücke angelenkt, und ein Organ (8), drehbar entsprechend einer Schwenkbewegung an das vierte Teilstück angelenkt.

## Claims

1. Process for controlling a robot arm formed from sections (2, 3, 4, 5, 7, 8) connected by joints (A to F), in which an objective to be reached by a direct path is defined by control instructions converted into displacements of the sections, characterized in that the joints have abutment states according to various articulation states, a substitution path being determined and automatically followed in place of the direct path when joints abut following the direct path, the substitution path being defined by calculating theoretical intermediate points (C1) between positions reached by the arm (C, C01) and the objective to be reached, then the theoretical intermediate states (ϑ11, ϑ21) of the joints at the theoretical intermediate points, and in that the joints are successively brought for each theoretical intermediate point to an abutment state (ϑ2) for the joints whose intermediate theoretical state is inaccessible and to the theoretical intermediate state (ϑ11) for the other joints, so as to bring the arm to a real intermediate point.

2. Process for controlling a robot arm according to claim 1, characterized in that the substitution path is interrupted when certain joints abut in isolation.

3. Process for controlling a robot arm according to claim 2, characterized in that the substitution path is interrupted when certain joints abut together.

4. Process for controlling a robot arm according to any one of the claims 1 to 3, characterized in that the arm has three sections (2, 3, 4) articulated in rotation in a horizontal plane and jointly mobile in vertical translation, a fourth section (7) articulated in rotation in a vertical plane to one of the three preceding sections and a member (8) articulated to the fourth section in rotation according to a pivoting movement.
